(19) Europäisches Patentamt
European Patent Office
Office européen des brevets

(11) Publication number: 0 420 539 A2

# (12) EUROPEAN PATENT APPLICATION

(21) Application number: 90310411.5

(51) Int. Cl.[5]: A23L 1/236, A23G 3/30

(22) Date of filing: 24.09.90

(30) Priority: 28.09.89 US 413912

(43) Date of publication of application:
03.04.91 Bulletin 91/14

(84) Designated Contracting States:
BE CH DE DK ES FR GB GR IT LI NL SE

(71) Applicant: WARNER-LAMBERT COMPANY
201 Tabor Road
Morris Plains New Jersey 07950(US)

(72) Inventor: Wong, Lucy L.
31-21 78th Street
Jackson Heights, N.Y. 11370(US)
Inventor: Faust, Steven M.
4-51, Audubon Court
Stanhope, N.Y. 07874(US)
Inventor: Cherukuri, Subraman R.
10 Jean Drive
Towaco, New Jersey 07082(US)

(74) Representative: Jones, Michael Raymond et al
HASELTINE LAKE & CO. Hazlitt House 28
Southampton Buildings Chancery Lane
London WC2A 1AT(GB)

## (54) Synergistic sweetening compositions containing a dipeptide sweetening agent and hydrogenated starch hydrolysates and methods for preparing same.

(57) The present invention pertains to a synergistic sweetening composition which comprises L-alpha-aspartyl-D-alanine N-(2,2,4,4-tetramethyl-3-thietanyl)amide and a hydrogenated starch hydrolysate. The synergistic sweetening composition may be used in a wide variety of ingestible products such as chewing gum compositions, hard and soft confections, beverages, and the like. The present invention also pertains to methods for preparing the synergistic sweetening compositions and the ingestible products in which they may be used.

EP 0 420 539 A2

# SYNERGISTIC SWEETENING COMPOSITIONS CONTAINING A DIPEPTIDE SWEETENING AGENT AND HYDROGENATED STARCH HYDROLYSATES AND METHODS FOR PREPARING SAME

## BACKGROUND OF THE INVENTION

### 1. Field of the Invention

This invention pertains to sweetness synergy achieved by combining a specific intense dipeptide sweetening agent and a bulk sweetening agent. More particularly, this invention relates to a synergistic sweetening effect found between the combination of L-alpha-aspartyl-D-alanine N-(2,2,4,4-tetramethyl-3-thietanyl)amide (Alitame) and hydrogenated starch hydrolysates. The synergistic sweetening compositions may be utilized in a wide variety of ingestible compositions. This invention also relates to methods for preparing these synergistic sweetening compositions and the ingestible compositions in which they may be employed.

### 2. Description of the Prior Art

Intense sweetening agents (sweeteners) are natural or synthetic compounds which have a greater sweetening intensity, and usually a lower caloric value, than that of sugar (sucrose). Because intense sweeteners have greater sweetening properties than sugar, smaller amounts of the sweeteners provide sweetening intensity equivalent to larger amounts of sugar. Intense sweeteners are well known in the art and are widely used as substitutes for sugar in many low calorie and/or noncariogenic compositions.

Intense sweeteners have a wide range of chemically distinct structures and hence possess varying properties. These intense sweetener compounds include water-soluble artificial sweeteners such as saccharin salts, cyclamate salts, and the potassium salt of 6-methyl-1,2,3-oxathiazin-4(3H)-one-2,2-dioxide (Acesulfame-K, a commercially available product from Hoechst Celanese Corporation, Somerville, New Jersey), proteins such as thaumatin (Talin, a commercially available product of Tate & Lyle Products, Reading, United Kingdom), chlorodeoxysugar derivatives (such as Sucralose, a commercially available product of McNeil Specialty Products Company, Skillman New Jersey), and dipeptides such as N-L-alpha-aspartyl-L-phenylalanine 1-methyl ester (Aspartame, a commercially available product of the Nutrasweet Company, Deerfield, Illinois) and L-alpha-aspartyl-D-alanine N-(2,2,4,4-tetramethyl-3-thietanyl)amide (Alitame, a commercially available product of Pfizer, New York, New York), and dihydrochalcones. Each of these sweetening agents has a distinct sweetening intensity compared to sucrose and this sweetening intensity is well documented. For example, the following compounds have the sweetening intensities set out in Table 1.

TABLE 1

| Sweetness Intensities of Various Sweetening Agents | |
|---|---|
| COMPOUND | SWEETNESS INTENSITY* |
| Soluble saccharin salts | 300X |
| Cyclamate salts | 30X |
| N-L-alpha-Aspartyl-L-phenylalanine 1-methyl ester (Aspartame) | 180X-200X |
| Potassium salt of 6-methyl- | |
| 1,2,3-oxathiazin-4(3H)-one-2,2-dioxide (Acesulfame-K) | 200X |
| 4,1′,6′-Trichloro-4,1′,6′-trideoxygalactosucrose (Sucralose) | 600X |
| L-alpha-Aspartyl-N-(2,2,4,4-tetramethyl-3-thietanyl)-D-alaninamide hydrate (Alitame) | 2000X |

* Compared to sucrose.

Because each intense sweetening agent is chemically distinct, each sweetener presents a different challenge with respect to the actual use of such sweetener in ingestible compositions. For example, some intense sweeteners present stability problems, such as Aspartame, which exhibits instability in the presence of aldehydes, ketones, moisture, and the like. Other intense sweeteners have an associated bitter taste or off-note such as Saccharin (a commercially available product of PMC Specialty Group Inc., Cincinnati, Ohio), stevioside, Acesulfame-K, glycyrrhizin, dipotassium glycyrrhizin, glycyrrhizic acid ammonium salt, and thaumatin (Talin).

United States patent no. 4,375,430, issued to Sklavounos and assigned to Pfizer, Inc., discloses the preparation and purification of certain dipeptide sweetening agents including Alitame.

United States patent no. 4,536,396, issued to Stephens, Jr. et al. and assigned to Pfizer Inc., discloses a method for masking the bitter taste, and enhancing the sweet taste, of Acesulfame-K by combining the bitter-tasting intense sweetener with the sweetener Alitame.

United States patents no. 4,279,931 and 4,346,116, issued to Verwaerde et al. and assigned to Roquette Freres, discloses the preparation of non-cariogenic hydrogenated starch hydrolysates useful in the manufacture of confectionery.

United States patent no. 4,382,962, issued to Devos et al. and assigned to Societe Roquette Freres, discloses the use of hydrogenated starch hydrolysates as softening agents in chewing gums.

United States patents no. 4,457,921 and 4,508,713, issued to Stroz et al. and assigned to Nabisco Brands Inc., discloses a method to reduce caries which employs a combination of a hydrogenated starch hydrolysate and sugar wherein the hydrogenated starch hydrolysate is present in an amount sufficient to inhibit the growth of Streptococcus mutans .

United States patent no. 4,241,090, issued to Stroz et al. and assigned to Life Savers, Inc., discloses the use of hydrogenated starch hydrolysates as softening agents in non-adhesive chewing gums.

United States patents no. 4,671,961 and 4,671,967, issued to Patel et al. and assigned to Wm. Wrigley Jr. Company, discloses the use of evaporated hydrogenated starch hydrolysates and a plasticizing agent in chewing gum compositions.

United States patent no. 4,726,953, issued to Carroll et al. and assigned to Nabisco Brands, Inc., discloses the use of cooked, aqueous hydrogenated starch hydrolysates and encapsulated saccharin in chewing gum compositions.

United States patent no. 4,753,806, issued to Carroll et al. and assigned to Nabisco Brands, Inc., discloses the use of cooked, aqueous hydrogenated starch hydrolysates having a moisture content of about 8% in chewing gum compositions.

United States patent no. 4,774,094, issued to Carroll et al. and assigned to Nabisco Brands, Inc., discloses the use of stabilized L-aspartic acid derivatives in comestibles containing greater than about 2% moisture by being formulated with cooked, aqueous hydrogenated starch hydrolysates having a moisture content of about 10%.

United States patent application serial no. 939,918, filed December 10, 1986, issued to Cherukuri et al. and assigned to Warner-Lambert Company, discloses reduced calorie chewing gums wherein soft polyvinyl acetate containing gum bases having an enhanced hydrophilic nature are employed in amounts of greater than about 50% in combination with up to about 0.60% of an intense sweetening agent and up to about 40% of a bulk sweetening agent. The gum bases are employed in major quantities to reduce the caloric content of the gums. The presence of the intense sweetening agent permits the level of bulk sweetening agent to be reduced from conventional levels without a sacrifice in product sweetness.

United States patent no. 4,698,223, issued to Perfetti et al. and assigned to Gum Base Co., SPA, discloses a no-calorie chewing gum composition which comprises from 92% to 99% of a gum base, up to 4% of glycerol, and up to 3% of a flavoring agent. The gum base comprises from 8% to 15% of an elastomer, from 10% to 30% of a hydrogenated or partially hydrogenated animal or vegetable oil, from 10% to 39% of an inert mineral filler, from 8% to 25% of polyvinyl acetate, from 4% to 9% of fatty acid glycerides, from 15% to 25% of resins, from 2% to 6% of natural gum, from 4% to 12% of wax and up to 0.05% of antioxidants.

Thus, a variety of combinations of sweetening agents are known which have specific sweetness intensities compared to sucrose. There is still a need, however, for sweetening compositions which have varying properties and enhanced sweetening intensities for use in ingestible compositions. Such enhanced or synergistic sweetening compositions would permit an ingestible composition to contain a reduced total amount of sweetening composition, and would thereby reduce costs, stability problems, taste problems, caloric content problems, cariogenic properties, and the like. The present invention provides such synergistic sweetening compositions and various sweetened ingestible compositions and chewing gum products

which incorporate the synergistic sweetening compositions.

## SUMMARY OF THE INVENTION

The present invention pertains to a synergistic sweetening composition which comprises L-alpha-aspartyl-D-alanine N-(2,2,4,4-tetramethyl-3-thietanyl)amide and hydrogenated starch hydrolysates. The synergistic sweetening composition may be used in a wide variety of ingestible products such as chewing gum compositions, hard and soft confections, beverages, and the like. The present invention also pertains to methods for preparing the synergistic sweetening compositions and the ingestible products in which they may be used.

## BRIEF DESCRIPTION OF THE DRAWINGS =

FIGURE 1 depicts in bar graph format the sweetness intensities found for compositions containing different combinations of intense sweetening agents and liquid bulking sweeteners (examples 1-8).

FIGURE 2 depicts in graphic format the sweetness intensities found for compositions containing different weight ratios of Alitame and HSH (examples 9-13).

FIGURE 3 depicts in graphic format the sweetness intensity contribution of Alitame, at various chew-out times, found for the chewing gum compositions of examples 14-17 which contained the sweetening combination of Alitame and either HSH or glycerin, together with sorbitol as the carbohydrate bulking agent.

FIGURE 4 depicts in graphic format the sweetness intensity contribution of Alitame, at various chew-out times, found for the chewing gum compositions of examples 18-21 which contained the sweetening combination of Alitame and either HSH or glycerin, together with maltitol as the carbohydrate bulking agent.

## DETAILED DESCRIPTION OF THE INVENTION

The present invention pertains to a synergistic sweetening composition which comprises an intense sweetening agent and a bulk sweetening agent. More particularly, the synergistic composition comprises L-alpha-aspartyl-D-alanine N-(2,2,4,4-tetramethyl-3-thietanyl)amide (Alitame) and hydrogenated starch hydrolysates. The synergistic sweetening composition may be used in a wide variety of ingestible products such as chewing gum compositions, hard and soft confections, beverages, and the like. The present invention also pertains to methods for preparing the synergistic sweetening compositions and the ingestible products in which they may be used.

Applicants define the terms "ingestible" and "edible" to include all materials and compositions which are used by or which perform a function in the body. Materials and compositions which are adsorbed and those which are not absorbed as well as those which are digestible and non-digestible are included.

The intense sweetening agent (sweetener) of the present invention is the dipeptide derivative L-alpha-aspartyl-D-alanine N-(2,2,4,4-tetra-methyl-3-thietanyl)amide (Alitame). L-alpha-aspartyl-D-alanine N-(2,2,4,4-tetramethyl-3-thietanyl)amide has a clean sugar-like sweetness with essentially no bitter after-taste. L-alpha-aspartyl-D-alanine N-(2,2,4,4-tetramethyl-3-thietanyl)amide has the chemical structure shown below:

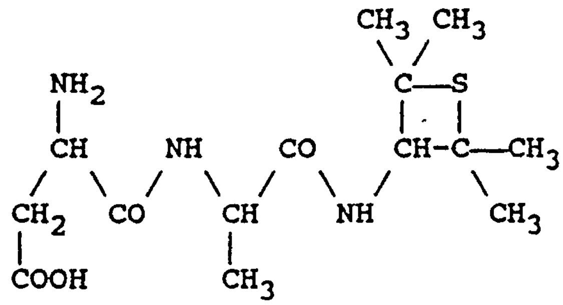

The bulk sweetening agent of the present invention is a hydrogenated starch hydrolysate (HSH) which includes hydrogenated corn syrups, hydrogenated glucose syrups, reconstituted powders containing sorbitol, hydrogenated disaccharides and polysaccharides, and the like, and mixtures thereof, having varying dextrose equivalents (DE). Hydrogenated starch hydrolysates are primarily prepared by the controlled catalytic hydrogenation of corn syrups. The resulting hydrogenated starch hydrolysates are mixtures of monomeric, dimeric, and polymeric saccharides. The preparation of these polyalcohols (polyols) is more fully discussed in United States patents no. 4,279,931 and 4,346,116, which disclosures are incorporated herein by reference. The ratios of the different types of saccharides give the particular hydrogenated starch hydrolysate different properties. The degree of polymerization (DP) value of various commercially available hydrogenated starch hydrolysates is presented in Table 1.

TABLE 2

| Degree of Polymerization (DP) Value For Typical Hydrogenated Starch Hydrolysates | | | | | | | |
|---|---|---|---|---|---|---|---|
| | DP-1 | DP-2 | DP-3 | DP-4+ | DP-3-DP-6 | DP-6+ | DP-3+ |
| Lycasin* | 6-8 | 50-55 | ND*** | ND*** | 20-25 | 15-20 | 35-45 |
| Hystar** | 15 | 50 | 12 | 23 | | | 35 |
| HM-75 | 13 | 50 | 12 | 25 | | | |
| Hystar 3375 | 14 | 18 | 10 | 58 | | | 68 |
| Hystar 4075 | 13 | 23 | 12 | 49 | | | 51 |
| Hystar 5875 | 7 | 60 | 11 | 22 | | | 33 |
| Hystar 6075 | 14 | 8 | 10 | 68 | | | 78 |

* Lycasin is a trademark of Roquette Corporation.
** Hystar is a trademark of Lonza, Inc.
*** Not determined

Hydrogenated starch hydrolysate products which are higher in the amounts of monomeric (DP-1) and dimeric (DP-2) saccharides present will have higher levels of sweetness and will produce confectionery products which have a soft texture. Hydrogenated starch hydrolysate products which are higher in the amounts of polymeric saccharides present will have a lower level of sweetness and will produce confectionery products which have a harder texture. DP-1, for example, refers to the degree of polymerization of a monomer such as sorbitol, mannitol, xylitol or other hydrogenated monosaccharide. DP-1 generally refers to sorbitol because of the natural abundance of glucose in the corn syrup starting material. Similarly, DP-2 refers to the degree of polymerization of a dimer such as maltitol or other hydrogenated disaccharide, while DP-3, DP-4, DP-5 and so on refer to the degree of polymerization of higher hydrogenated saccharides (polysaccharides) present in the hydrogenated starch hydrolysate product.

Preferably, the hydrogenated starch hydrolysates of the present invention comprise polyols having a DP-1 value of up to about 19%, polyols having a DP-2 value of up to 60%, polyols having a DP-20 or higher value of up to 3%, and polyols having a DP-3 to DP-20 value constituting the balance.

More preferably, the hydrogenated starch hydrolysate is the hydrolysate manufactured under the tradename Lycasin 80/55, by Roquette Corporation. Lycasin 80/55 is a hydrogenated starch hydrolysate composition which is 75% solids, has a sweetness of about 0.75 times that of sucrose, and has a viscosity

of about 2000cps at 200° C. Lycasin 80/55 contains about 6 to 8% D-sorbitol (DP-1), about 50 to 55% hydrogenated disaccharides (DP-2), about 20 to 25% polyols comprising hydrogenated trisaccharides to hexasaccharides (DP-3 to DP-6), and about 15 to 20% polyols comprising hydrogenated polysaccharides higher than hexasaccharides (greater than DP-6).

In a preferred embodiment, the synergistic sweetening compositions of the present invention comprise L-alpha-aspartyl-D-alanine N-(2,2,4,4-tetramethyl-3-thietanyl)amide and a hydrogenated starch hydrolysate present in a ratio by weight of from about 0.02:99.98 to about 1:99, respectively. In a more preferred embodiment, the synergistic compositions comprise L-alpha-aspartyl-D-alanine N-(2,2,4,4-tetramethyl-3-thietanyl)amide and a hydrogenated starch hydrolysate present in a ratio by weight of from about 0.05:99.95 to about 0.6:99.4, and most preferably in a ratio by weight of 0.07:99.93, respectively.

The intense sweetening agent of the present invention may be used in many distinct physical forms well known in the art to provide an initial burst of sweetness and/or a prolonged sensation of sweetness. Without being limited thereto, such physical forms include free forms, such as spray dried, powdered, and beaded forms, and encapsulated forms, and mixtures thereof.

The synergistic sweetening compositions of the present invention are prepared by admixing L-alpha-aspartyl-D-alanine N-(2,2,4,4-tetramethyl-3-thietanyl)amide and the hydrogenated starch hydrolysate.

The combination of the intense sweetener and bulk sweetener set out above results in a synergistic sweetening composition having an enhanced sweetness effect both in solution and in chewing gum compositions. The sweetening intensity effect of the present composition is markedly greater than that expected by mere combination of the sweetening agents. Accordingly, applicants' synergistic sweetening compositions have the advantage of requiring lower amounts of sweetener to adequately sweeten an ingestible composition.

Once prepared, the inventive synergistic sweetening composition may be stored for future use or may be formulated in effective amounts with conventional additives, such as pharmaceutically acceptable carriers or confectionery ingredients to prepare a wide variety of ingestible compositions, such as foodstuffs, beverages, jellies, extracts, hard and soft confectionery products, orally administered pharmaceutical compositions, and hygienic products such as toothpastes, dental lotions, mouth washes and chewing gums.

The amount of the inventive synergistic sweetening composition employed in an edible composition is an effective amount to sweeten the edible composition. The exact amount of the synergistic sweetening composition employed is a matter of preference, subject to such factors as the type of bulking agent or carrier employed in the composition and the strength of sweetness desired. Thus, the amount of sweetener composition may be varied in order to obtain the result desired in the final product and such variations are within the capabilities of those skilled in the art without the need for undue experimentation. In general, the amount of synergistic sweetening composition normally present in an edible composition will be from about 10% to about 50%, by weight of the edible composition.

The present invention extends to methods of making the ingestible compositions. In such a method, a composition is made by admixing an effective amount of the synergistic sweetening composition of the present invention with a pharmaceutically acceptable carrier or confectionery material and the other ingredients of the final desired ingestible composition. Other ingredients will usually be incorporated into the composition as dictated by the nature of the desired composition as well known by those having ordinary skill in the art. The ultimate ingestible compositions are readily prepared using methods generally known in the food technology and pharmaceutical arts.

In another embodiment, the present invention is directed at a method for sweetening an edible composition which comprises admixing an effective amount of a synergistic sweetening composition with the edible composition wherein the synergistic sweetening composition comprises L-alpha-aspartyl-D-alanine N-(2,2,4,4-tetramethyl-3-thietanyl)-amide and a hydrogenated starch hydrolysate.

An important aspect of the present invention includes an improved chewing gum composition incorporating the inventive synergistic sweetening composition and a method for preparing the chewing gum composition, including both chewing gum and bubble gum formulations. In general, the improved chewing gum compositions will contain a gum base, an effective amount of the inventive synergistic sweetening composition, and various additives.

The chewing gum compositions may be reduced-calorie chewing gums employing high levels of a chewing gum base having an enhanced hydrophilic character. These reduced-calorie chewing gums will comprise a gum base present in an amount from about 50% to about 95%, preferably from about 50% to about 85%, and more preferably from about 60% to about 70%, by weight of the chewing gum composition. When a reduced-calorie product is not desired, the chewing gum composition may contain lower amounts of a chewing gum base. These chewing gums will comprise a gum base present in an

amount up to about 55%, preferably from about 15% to about 40%, and more preferably from about 20% to about 35%, by weight of the chewing gum composition.

Chewing gum compositions employing a high level of a chewing gum base having an enhanced hydrophilic character are more fully described in United States patent application serial no. 939,918, filed December 10, 1986, which disclosure is incorporated herein by reference.

As used herein, the term "reduced-calorie composition" means a composition having a caloric value two thirds or less than that of a conventional composition. The term "tight" or "rubbery" chew refers to a chewing gum composition which requires a large amount of muscular chewing effort to masticate or to a composition which provides a gum bolus with high elasticity and bounce and which is difficult to deform.

Gum bases having an enhanced hydrophilic character include polyvinyl acetate gum bases which may also contain a low melting point wax. Such gum bases do not require a high level of bulking agent to plasticize the gum base and render it soft during chewing. These gum bases may be used at higher than normal levels in chewing gum compositions in place of a bulking and/or a bulk sweetening agent to prepare high base-low bulking agent reduced-calorie gums which do not have rubbery or tight chew characteristics. These gum bases possess increased hydrophilic properties over conventional gum bases and appear to increase in size during chewing releasing flavoring and sweetening agents which would normally be entrapped in the gum base while maintaining a soft chew texture. Reduced-calorie chewing gum compositions prepared with such gum bases in high levels are less hygroscopic (have lower moisture-pickup) and are less prone to becoming stale than conventional reduced-calorie gum compositions while having comparable firmness and texture.

In one embodiment, the invention pertains to a reduced-calorie chewing gum composition which comprises (A) a gum base present in an amount from about 40% to about 75%, by weight of the chewing gum composition, which comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, and (e) a material selected from the group consisting of elastomer solvents, emulsifiers, plasticizers, fillers, and mixtures thereof, present in an amount to bring the total amount of gum base to 100%, by weight of the gum base, (B) a bulking agent present in an amount up to about 60%, by weight of the chewing gum composition, and (C) an effective amount of a synergistic sweetening composition which comprises L-alpha-aspartyl-D-alanine N-(2,2,4,4-tetramethyl-3-thietanyl)amide and a hydrogenated starch hydrolysate.

The elastomers (rubbers) employed in the gum base of the present invention will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and mixtures thereof. Examples of synthetic elastomers include, without limitation, styrene-butadiene copolymers (SBR), polyisobutylene, isobutylene-isoprene copolymers, polyethylene, and the like, and mixtures thereof.

The amount of elastomer employed in the gum base will vary greatly depending upon various factors such as the type of gum base used, the consistency of the gum composition desired and the other components used in the composition to make the final chewing gum product. In general, the elastomer will be present in the gum base in an amount from about 0.5% to about 20%, and preferably from about 2.5% to about 15%, by weight of the gum base.

The polyvinyl acetate polymer employed in the gum base of the present invention is a polyvinyl acetate polymer having a medium molecular weight, specifically, having a mean average molecular weight in the range from about 35,000 to about 55,000. This medium molecular weight polyvinyl acetate polymer will preferably have a viscosity from about 35 seconds to about 55 seconds (ASTM designation D1200-82 using a Ford cup viscometer procedure). The medium molecular weight polyvinyl acetate polymer will be present in the gum base in an amount from about 10% to about 25%, and preferably from about 12% to about 27%, by weight of the gum base.

The medium molecular weight polyvinyl acetate polymer may also be blended with a low molecular weight polyvinyl acetate polymer. The low molecular weight polyvinyl acetate polymer will have a mean

average molecular weight in the range from about 12,000 to about 16,000. This low molecular weight polyvinyl acetate polymer will preferably have a viscosity from about 14 seconds to about 16 seconds (ASTM designation D1200-82 using a Ford cup viscometer procedure). The low molecular weight polyvinyl acetate polymer will be present in the gum base in an amount up about 17%, and preferably from about 12% to about 17%, by weight of the gum base.

When a low molecular weight polyvinyl acetate polymer is blended with a medium molecular weight polyvinyl acetate polymer, the polymers will be present in a mole ratio from about 1:0.5 to about 1:1.5, respectively.

The medium molecular weight polyvinyl acetate polymer may also be blended with a high molecular weight polyvinyl acetate polymer. The high molecular weight polyvinyl acetate polymer will have a mean average molecular weight in the range from about 65,000 to about 95,000. The high molecular weight polyvinyl acetate polymer will be present in the gum base in an amount up to about 5%, by weight of the gum base.

The acetylated monoglycerides in the present invention, like the polyvinyl acetate polymer, serve as plasticizing agents. While the saponification value of the acetylated monoglycerides is not critical, preferable saponification values are 278 to 292, 316 to 331, 370 to 380, and 430 to 470. A particularly preferred acetylated monoglyceride has a saponification value above about 400. Such acetylated monoglycerides generally have an acetylation value (percentage acetylated) above about 90 and a hydroxyl value below about 10 (Food Chemical Codex (FCC) III/P508 and the revision of AOCS).

The use of acetylated monoglycerides in the present gum base is preferred over the use of bitter polyvinyl acetate (PVA) plasticizers, in particular, triacetin. The acetylated monoglycerides will be present in the gum base in an amount from about 4.5% to about 10%, and preferably from about 5% to about 9%, by weight of the gum base.

The wax in the gum base of the present invention softens the polymeric elastomer mixture and improves the elasticity of the gum base. The waxes employed will have a melting point below about 60° C., and preferably between about 45° C. and about 55° C. A preferred wax is low melting paraffin wax. The wax will be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, carnuba wax, most petroleum waxes, and the like, and mixtures thereof.

In addition to the components set out above, the gum base includes a variety of traditional ingredients, such as a component selected from the group consisting of elastomer solvents, emulsifiers, plasticizers, fillers, and mixtures thereof. These ingredients are present in the gum base in an amount to bring the total amount of gum base to 100%.

The gum base may contain elastomer solvents to aid in softening the elastomer component. Such elastomer solvents may comprise those elastomer solvents known in the art, for example, terpinene resins such as polymers of alpha-pinene or beta-pinene, methyl, glycerol and pentaerythritol esters of rosins and modified rosins and gums, such as hydrogenated, dimerized and polymerized rosins, and mixtures thereof. Examples of elastomer solvents suitable for use herein include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. A preferred emulsifier is glyceryl monostearate. The emulsifier may be employed in amounts from about 2% to about 15%, and preferably from about 7% to about 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes,

polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20%, and preferably in amounts from about 9% to about 17%, by weight of the gum base.

Preferred plasticizers are the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and preferably in amounts from about 5% to about 13.5%, by weight of the gum base.

In another preferred embodiment, the softening agent is anhydrous glycerin, such as the commercially available United States Pharmacopeia (USP) grade. Glycerin is a syrupy liquid with a sweet warm taste and has a sweetness of about 60% of that of cane sugar. Because glycerin is hygroscopic, it is important that the anhydrous glycerin be maintained under anhydrous conditions throughout the preparation of the chewing gum composition.

The gum base of this invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, and the like, and mixtures thereof. These fillers or adjuvants may be used in the gum base compositions in various amounts. Preferably the amount of filler, when used, will be present in an amount from about 15% to about 40%, and preferably from about 20% to about 30%, by weight of the gum base.

A variety of traditional ingredients may be optionally included in the gum base in effective amounts such as coloring agents, antioxidants, preservatives, flavoring agents, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base.

The manner in which the gum base components are admixed is not critical and is performed using standard techniques and apparatus known to those skilled in the art. In a typical method, an elastomer is admixed with an elastomer solvent and/or a plasticizer and/or an emulsifier and agitated for a period of from 1 to 30 minutes. After blending is complete, the polyvinyl acetate component is admixed into the mixture. The medium molecular weight polyvinyl acetate is preferably admixed prior to addition of the optional low molecular weight polyvinyl acetate to prevent the creation of pockets of polyvinyl acetate within the elastomer mixture. The remaining ingredients, such as the low melting point wax, are then admixed, either in bulk or incrementally, while the gum base mixture is blended again for 1 to 30 minutes.

Other gum bases having an enhanced hydrophilic nature and suitable for use in reduced-calorie chewing gum compositions in high levels may also be employed in the present invention. In general, these gum bases may be employed in amounts up to 99%, preferably from about 40% to about 85%, and more preferably from about 40% to about 75%, by weight of the chewing gum composition. Suitable gum bases having an enhanced hydrophilic nature include, for example, those disclosed in United States patent no. 4,698,223, which disclosure is incorporated herein by reference. The gum base is formulated with the inventive synergistic sweetening composition and conventional additives such as a bulking agent to prepare a wide variety of sweetened chewing gum compositions.

The amount of gum base employed in the chewing gum composition will vary depending on such factors as the type of gum base used, the consistency desired, and the other components used to make the final chewing gum product. In general, the gum base having an enhanced hydrophilic character will be present in the chewing gum composition in an amount from about 50% to about 95%, preferably from about 50% to about 85%, and more preferably from about 60% to about 70%, by weight of the chewing gum composition.

In another embodiment, the invention pertains to a chewing gum composition which contains lower amounts of a chewing gum base, i.e., gum base present in an amount up to about 55%, preferably from about 15% to about 40%, and more preferably from about 20% to about 35%, by weight of the chewing gum composition. In this embodiment, the gum base will comprise an elastomer and a variety of traditional ingredients such as an elastomer solvent, waxes, emulsifiers, plasticizers or softeners, bulking agents such as mineral adjuvants which may serve as fillers and textural agents, coloring agents, antioxidants, preservatives, flavoring agents, and the like, and mixtures thereof. Illustrative examples of these gum base components have been set out above.

Once prepared, the gum base may be formulated with the synergistic sweetening composition of the

present invention and conventional additives such as a bulking agent to prepare a wide variety of chewing gum compositions.

In addition to the chewing gum base, the chewing gum composition may include a bulking agent. The bulking agents (carriers, extenders), in the present invention may be water-soluble and include sweetening agents selected from the group consisting of, but not limited to, monosaccharides, disaccharides, polysaccharides, sugar alcohols, and mixtures thereof; randomly bonded glucose polymers such as those polymers distributed under the tradename POLYDEXTROSE by Pfizer, Inc., Groton, Connecticut; isomalt (a racemic mixture of alpha-D-glucopyranosyl-1,6-mannitol and alpha-D-glucopyranosyl-1,6-sorbitol manufactured under the tradename PALATINIT by Suddeutsche Zucker), maltodextrins; hydrogenated starch hydrolysates; hydrogenated hexoses; hydrogenated disaccharides; minerals, such as calcium carbonate, talc, titanium dioxide, dicalcium phosphate, celluloses and the and the like, and mixtures thereof. Bulking agents may be used in amounts up to about 60%, and preferably in amounts from about 25% to about 60%, by weight of the chewing gum composition.

Suitable sugar bulking agents include monosaccharides, disaccharides and polysaccharides such as xylose, ribulose, glucose (dextrose), mannose, galactose, fructose (levulose), sucrose (sugar), maltose, invert sugar, partially hydrolyzed starch and corn syrup solids, and mixtures thereof. Mixtures of sucrose and corn syrup solids are the preferred sugar bulking agents.

Suitable sugar alcohol bulking agents include sorbitol, xylitol, mannitol, galactitol, maltitol, and mixtures thereof. Mixtures of sorbitol and mannitol are the preferred sugar alcohol bulking agents.

Maltitol is a sweet, non-caloric, water-soluble sugar alcohol useful as a bulking agent in the preparation of non-caloric beverages and foodstuffs and is more fully described in United States patent no. 3,708,396, which disclosure is incorporated herein by reference. Maltitol is made by hydrogenation of maltose which is the most common reducing disaccharide and is found in starch and other natural products.

The gum composition may include effective amounts of conventional additives selected from the group consisting of plasticizers, softeners, emulsifiers, waxes, fillers, mineral adjuvants, flavoring agents (flavors, flavorings), coloring agents (colorants, colorings), antioxidants, acidulants, thickening agents, and the like, and mixtures thereof. These ingredients are present in the chewing gum composition in an amount to bring the total amount of chewing gum composition to 100%. Some of these additives may serve more than one purpose. For example, in sugarless gum compositions, a sweetener, such as sorbitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickening agents, used alone or in combination with other softeners, such as methyl cellulose, alginates, carrageenan, xanthan gum, gelatin, carob, tragacanth, and locust bean, acidulants such as malic acid, adipic acid, citric acid, tartaric acid, fumaric acid, and mixtures thereof, and fillers, such as those discussed above under the category of mineral adjuvants.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, artificial vanilla, cinnamon derivatives, and various fruit flavors, whether employed individually or in admixture.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing , publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies,

many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, mixtures thereof and the like.

The flavoring agent may be employed in either liquid form and/or dried form. When employed in the latter form, suitable drying means such as spray drying the oil may be used. Alternatively, the flavoring agent may be absorbed onto water soluble materials, such as cellulose, starch, sugar, maltodextrin, gum arabic and so forth or may be encapsulated. The actual techniques for preparing such dried forms are well known and do not constitute a part of this invention.

The flavoring agents of the present invention may be used in many distinct physical forms well known in the art to provide an initial burst of flavor and/or a prolonged sensation of flavor. Without being limited thereto, such physical forms include free forms, such as spray dried, powdered, and beaded forms, and encapsulated forms, and mixtures thereof.

Encapsulated delivery systems for flavoring agents or sweetening agents comprise a hydrophobic matrix of fat or wax surrounding a sweetening agent or flavoring agent core. The fats may be selected from any number of conventional materials such as fatty acids, glycerides or polyglycerol esters, sorbitol esters, and mixtures thereof. Examples of fatty acids include hydrogenated and partially hydrogenated vegetable oils such as palm oil, palm kernel oil, peanut oil, rapeseed oil, rice bran oil, soybean oil, cottonseed oil, sunflower oil, safflower oil, and mixtures thereof. Glycerides which are useful include monoglycerides, diglycerides, and triglycerides.

Waxes useful may be chosen from the group consisting of natural and synthetic waxes, and mixtures thereof. Non-limiting examples include paraffin wax, petrolatum, carbowax, microcrystalline wax, beeswax, carnauba wax, candellila wax, lanolin, bayberry wax, sugarcane wax, spermaceti wax, rice bran wax, and mixtures thereof.

The fats and waxes may be use individually or in combination in amounts varying from about 10 to about 70%, and preferably in amounts from about 40 to about 58%, by weight of the encapsulated system. When used in combination, the fat and wax are preferably present in a ratio from about 70:10 to 85:15, respectively.

Typical encapsulated flavoring agent or sweetening agent delivery systems are disclosed in United States patents no. 4,597,970 and 4,722,845, which disclosures are incorporated herein by reference.

The amount of flavoring agent employed herein is normally a matter of preference subject to such factors as the type of final chewing gum composition, the individual flavor, the gum base employed, and the strength of flavor desired. Thus, the amount of flavoring may be varied in order to obtain the result desired in the final product and such variations are within the capabilities of those skilled in the art without the need for undue experimentation. In gum compositions, the flavoring agent is generally present in amounts from about 0.02% to about 5%, and preferably from about 0.1% to about 2%, and more preferably, from about 0.8% to about 1.8%, by weight of the chewing gum composition.

The coloring agents useful in the present invention are used in amounts effective to produce the desired color. These coloring agents include pigments which may be incorporated in amounts up to about 6%, by weight of the gum composition. A preferred pigment, titanium dioxide, may be incorporated in amounts up to about 2%, and preferably less than about 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p -sulfoniumbenzylamino) diphenylmethylene]-[1-(N-ethyl -N- p -sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

Suitable oils and fats usable in gum compositions include partially hydrogenated vegetable or animal fats, such as coconut oil, palm kernel oil, beef tallow, lard, and the like. These ingredients when used are generally present in amounts up to about 7%, and preferably up to about 3.5%, by weight of the gum composition.

As set out above, the synergistic sweetening compositions of the present invention comprise L-alpha-aspartyl-D-alanine N-(2,2,4,4-tetramethyl-3-thietanyl)amide and a hydrogenated starch hydrolysate. In a preferred embodiment, the synergistic sweetening compositions of the present invention comprise L-alpha-aspartyl-D-alanine N-(2,2,4,4-tetramethyl-3-thietanyl)amide and a hydrogenated starch hydrolysate present

in a ratio by weight of from about 0.02:99.98 to about 1:99, respectively. In a more preferred embodiment, the synergistic compositions comprise L-alpha-aspartyl-D-alanine N-(2,2,4,4-tetramethyl-3-thietanyl)amide and a hydrogenated starch hydrolysate present in a ratio by weight of from about 0.05:99.95 to about 0.6:99.4, and most preferably in a ratio by weight of 0.07:99.93, respectively.

In accordance with this invention, effective amounts of the synergistic sweetening composition of the present invention may be admixed into the chewing gum composition. The exact amount of synergistic sweetening composition employed is normally a matter of preference subject to such factors as the particular type of gum composition being prepared, the type of bulking agent or carrier employed, the type of flavor employed and the intensity of sweetness desired. Thus, the amount of synergistic sweetening composition may be varied in order to obtain the result desired in the final product and such variations are within the capabilities of those skilled in the art without the need for undue experimentation. In general, the amount of synergistic sweetening composition normally present in a chewing gum composition will be from about 1% to about 25%, preferably from about 2% to about 20%, and more preferably from about 5% to about 15%, by weight of the chewing gum composition.

The present invention also includes a method for preparing the improved chewing gum compositions, including both chewing gum and bubble gum formulations. The chewing gum compositions may be prepared using standard techniques and equipment known to those skilled in the art. The apparatus useful in accordance with the present invention comprises mixing and heating apparatus well known in the chewing gum manufacturing arts, and therefore the selection of the specific apparatus will be apparent to the artisan.

In such a method, a chewing gum composition is made by admixing the gum base with the synergistic sweetening composition and the other ingredients of the final desired chewing gum composition. Other ingredients will usually be incorporated into the composition as dictated by the nature of the desired composition as well known by those having ordinary skill in the art. The ultimate chewing gum compositions are readily prepared using methods generally known in the food technology and chewing gum arts.

For example, the gum base is heated to a temperature sufficiently high to soften the base without adversely effecting the physical and chemical make up of the base. The optimal temperatures utilized may vary depending upon the composition of the gum base used, but such temperatures are readily determined by those skilled in the art without undue experimentation.

The gum base is conventionally melted at temperatures that range from about 60° C. to about 120° C. for a period of time sufficient to render the base molten. For example, the gum base may be heated under these conditions for a period of about thirty minutes just prior to being admixed incrementally with the remaining ingredients of the gum composition such as the inventive sweetener composition, plasticizer, the softener, the bulking agent, and/or fillers, coloring agents and flavoring agents to plasticize the blend as well as to modulate the hardness, viscoelasticity and formability of the base. Mixing is continued until a uniform mixture of gum composition is obtained. Thereafter the gum composition mixture may be formed into desirable chewing gum shapes.

As set out above, the present invention is directed to a sweetened chewing gum composition which comprises a chewing gum base and an effective amount of a synergistic sweetening composition wherein the synergistic sweetening composition comprises L-alpha-aspartyl-D-alanine N-(2,2,4,4-tetramethyl-3-thietanyl)amide and a hydrogenated starch hydrolysate. In a preferred embodiment, the sweetened chewing gum composition comprises a chewing gum base present in an amount from about 50% to about 95%, preferably from about 50% to about 85%, and more preferably from about 60% to about 70%, by weight of the chewing gum composition. In another preferred embodiment, the sweetened chewing gum composition comprises a chewing gum base present in an amount up to about 55%, preferably from about 15% to about 40%, and more preferably from about 20% to about 35%, by weight of the chewing gum composition.

In another embodiment, the invention is directed to a method for preparing a sweetened chewing gum composition which comprises admixing an effective amount of a synergistic sweetening composition with a chewing gum base wherein the synergistic sweetening composition comprises L-alpha-aspartyl-D-alanine N-(2,2,4,4-tetramethyl-3-thietanyl)-amide and a hydrogenated starch hydrolysate. In a preferred embodiment, the method is directed at a sweetened chewing qum composition which comprises a chewing gum base present in an amount from about 50% to about 95%, preferably from about 50% to about 85%, and more preferably from about 60% to about 70%, by weight of the chewing gum composition. In another preferred embodiment, the method is directed at a sweetened chewing gum composition which comprises a chewing gum base present in an amount up to about 55%, preferably from about 15% to about 40%, and more preferably from about 20% to about 35%, by weight of the chewing gum composition.

Another important aspect of the present invention includes a sweetened confectionery composition incorporating the inventive synergistic sweetening composition and a method for preparing the sweetened

confectionery compositions. The preparation of confectionery formulations is historically well known and has changed little through the years. Confectionery items have been classified as either "hard" confectionery or "soft" confectionery. The synergistic sweetening compositions of the present invention can be incorporated into the confections by admixing the inventive composition into the conventional hard and soft confections.

Hard confectionery may be processed and formulated by conventional means. In general, a hard confectionery has a base composed of a mixture of sugar and other carbohydrate bulking agents kept in an amorphous or glassy condition. This form is considered a solid syrup of sugars generally having from about 0.5% to about 1.5% moisture. Such materials normally contain up to about 92% corn syrup, up to about 55% sugar and from about 0.1% to about 5% water, by weight of the final composition. The syrup component is generally prepared from corn syrups high in fructose, but may include other materials. Further ingredients such as flavorings, sweeteners, acidulants, colorants and so forth may also be added.

Such confectionery may be routinely prepared by conventional methods such as those involving fire cookers, vacuum cookers, and scraped-surface cookers also referred to as high speed atmospheric cookers.

Fire cookers involve the traditional method of making a candy base. In this method, the desired quantity of carbohydrate bulking agent is dissolved in water by heating the agent in a kettle until the bulking agent dissolves. Additional bulking agent may then be added and cooking continued until a final temperature of 145° C. to 156° C. is achieved. The batch is then cooled and worked as a plastic-like mass to incorporate additives such as flavors, colorants and the like.

A high-speed atmospheric cooker uses a heat-exchanger surface which involves spreading a film of candy on a heat exchange surface, the candy is heated to 165° C. to 170° C. in a few minutes. The candy is then rapidly cooled to 100° C. to 120° C. and worked as a plastic-like mass enabling incorporation of the additives, such as flavors, colorants and the like.

In vacuum cookers, the carbohydrate bulking agent is boiled to 125° C. to 132° C., vacuum is applied and additional water is boiled off without extra heating. When cooking is complete, the mass is a semi-solid and has a plastic-like consistency. At this point, flavors, colorants, and other additives are admixed in the mass by routine mechanical mixing operations.

The optimum mixing required to uniformly mix the flavors, colorants and other additives during conventional manufacturing of hard confectionery is determined by the time needed to obtain a uniform distribution of the materials. Normally, mixing times of from 4 to 10 minutes have been found to be acceptable.

Once the candy mass has been properly tempered, it may be cut into workable portions or formed into desired shapes. A variety of forming techniques may be utilized depending upon the shape and size of the final product desired. A general discussion of the composition and preparation of hard confections may be found in H.A. Lieberman, Pharmaceutical Dosage Forms: Tablets , Volume 1 (1980), Marcel Dekker, Inc., New York, N.Y. at pages 339 to 469, which disclosure is incorporated herein by reference.

The apparatus useful in accordance with the present invention comprises cooking and mixing apparatus well known in the confectionery manufacturing arts, and therefore the selection of the specific apparatus will be apparent to the artisan.

In contrast, compressed tablet confections contain particular materials and are formed into structures under pressure. These confections generally contain sugars in amounts up to about 95%, by weight of the composition, and typical tablet excipients such as binders and lubricants as well as flavors, colorants and so forth.

Similar to hard confectionery, soft confectionery may be utilized in this invention. The preparation of soft confections, such as nougat, involves conventional methods, such as the combination of two primary components, namely (1) a high boiling syrup such as a corn syrup, hydrogenated starch hydrolysate or the like, and (2) a relatively light textured frappe, generally prepared from egg albumin, gelatin, vegetable proteins, such as soy derived compounds, sugarless milk derived compounds such as milk proteins, and mixtures thereof. The frappe is generally relatively light, and may, for example, range in density from about 0.5 to about 0.7 grams/cc.

The high boiling syrup, or "bob syrup" of the soft confectionery is relatively viscous and has a higher density than the frappe component, and frequently contains a substantial amount of carbohydrate bulking agent such as a hydrogenated starch hydrolysate. Conventionally, the final nougat composition is prepared by the addition of the "bob syrup" to the frappe under agitation, to form the basic nougat mixture. Further ingredients such as flavoring, additional carbohydrate bulking agent, colorants, preservatives, medicaments, mixtures thereof and the like may be added thereafter also under agitation. A general discussion of the composition and preparation of nougat confections may be found in B.W. Minifie, Chocolate, Cocoa and Confectionery : Science and Technology, 2nd edition, AVI Publishing Co., Inc., Westport, Conn. (1980), at

pages 424-425, which disclosure is incorporated herein by reference.

The procedure for preparing the soft confectionery involves known procedures. In general, the frappe component is prepared first and thereafter the syrup component is slowly added under agitation at a temperature of at least about 65° C., and preferably at least about 100° C. The mixture of components is continued to be mixed to form a uniform mixture, after which the mixture is cooled to a temperature below 80° C., at which point, the flavor may be added. The mixture is further mixed for an additional period until it is ready to be removed and formed into suitable confectionery shapes.

As set out above, the synergistic sweetening compositions of the present invention comprise L-alpha-aspartyl-D-alanine N-(2,2,4,4-tetramethyl-3-thietanyl)amide and a hydrogenated starch hydrolysate. In a preferred embodiment, the synergistic sweetening compositions of the present invention comprise L-alpha-aspartyl-D-alanine N-(2,2,4,4-tetramethyl-3-thietanyl)amide and a hydrogenated starch hydrolysate present in a ratio by weight of from about 0.02:99.98 to about 1:99, respectively. In a more preferred embodiment, the synergistic compositions comprise L-alpha-aspartyl-D-alanine N-(2,2,4,4-tetramethyl-3-thietanyl)amide and a hydrogenated starch hydrolysate present in a ratio by weight of from about 0.05:99.95 to about 0.6:99.4, and most preferably in a ratio by weight of 0.07:99.93, respectively.

In accordance with this invention, effective amounts of the synergistic sweetening compositions of the present invention may be admixed into the hard and soft confections. The exact amount of synergistic sweetening composition may be varied in order to obtain the result desired in the final product and such variations are within the capabilities of those skilled in the art without the need for undue experimentation. The exact amount of synergistic sweetening composition employed is normally a matter of preference subject to such factors as the particular type of confection being prepared, the type of bulking agent or carrier employed, the type of flavor employed and the intensity of sweetness desired. Thus, the amount of synergistic sweetening composition may be varied in order to obtain the result desired in the final product and such variations are within the capabilities of those skilled in the art without the need for undue experimentation. In general, the amount of synergistic sweetening composition normally present in a hard or soft confection will be from about 50% to about 98%, by weight of the confection.

The present invention extends to methods of making the improved sweetened confections. The synergistic sweetening compositions may be incorporated into an otherwise conventional hard or soft confection composition using standard techniques and equipment known to those skilled in the art. The apparatus useful in accordance with the present invention comprises mixing and heating apparatus well known in the confectionery manufacturing arts, and therefore the selection of the specific apparatus will be apparent to the artisan.

In such a method, a composition is made by admixing the inventive synergistic sweetening composition and the confectionery bulking agent into the confectionery composition along with the other ingredients of the final desired composition. Other ingredients will usually be incorporated into the composition as dictated by the nature of the desired composition as well known by those having ordinary skill in the art. The ultimate confectionery compositions are readily prepared using methods generally known in the food technology and pharmaceutical arts. Thereafter the confectionery mixture may be formed into desirable confectionery shapes.

The synergistic sweetening compositions may be formulated with conventional ingredients which offer a variety of textures to suit particular applications. Such ingredients may be in the form of hard and soft confections, tablets, toffee, nougat, chewy candy, chewing gum and so forth, both sugar and sugarless. The acceptable ingredients may be selected from a wide range of materials. Without being limited thereto, such materials include diluents, binders and adhesives, lubricants, disintegrants, bulking agents, humectants and buffers and adsorbents. The preparation of such confections and chewing gum products is well known.

In a preferred embodiment, the invention is directed at a sweetened confectionery composition which comprises a confectionery bulking agent and an effective amount of a synergistic sweetening composition wherein the synergistic sweetening composition comprises L-alpha-aspartyl-D-alanine N-(2,2,4,4-tetramethyl-3-thietanyl)amide and a hydrogenated starch hydrolysate.

In another preferred embodiment, the invention is directed at a method for preparing a sweetened confectionery composition which comprises admixing an effective amount of a synergistic sweetening composition with a confectionery bulking agent wherein the synergistic sweetening composition comprises L-alpha-aspartyl-D-alanine N-(2,2,4,4-tetramethyl-3-thietanyl)amide and a hydrogenated starch hydrolysate.

In yet another embodiment, the present invention is directed at a method for sweetening a confectionery composition which comprises admixing an effective amount of a synergistic sweetening composition with the confectionery composition wherein the synergistic sweetening composition comprises L-alpha-aspartyl-D-alanine N-(2,2,4,4-tetramethyl-3-thietanyl)amide and a hydrogenated starch hydrolysate.

The present invention is further illustrated by the following examples which are not intended to limit the

effective scope of the claims. All parts and percentages in the examples and throughout the specification and claims are by weight of the final composition unless otherwise specified.

## EXAMPLES 1-8

These examples demonstrate a comparison of the sweetness intensity contributions of various intense sweeteners in liquid bulk sweeteners. The examples also illustrate the synergistic sweetness intensity of L-alpha-aspartyl-D-alanine N-(2,2,4,4-tetramethyl-3-thietanyl)amide and HSH in solution.

Initial stock aqueous solutions of Alitame, Aspartame and Sucralose were prepared. Alitame was prepared as a 0.06% solution, Aspartame was prepared as a 0.6% solution and Sucralose was prepared as a 0.2% solution. These stock sweetener solutions were prepared having identical sucrose equivalents (equivalent sweetness intensities). The stock solutions were then combined with water and HSH (a hydrogenated starch hydrolysate having a sweetness of about 0.75X that of sucrose) or glycerin (U.S.P., a control-liquid bulk sweetener, having a sweetness of about 0.60X that of sucrose) to formulate the test solutions employed in Examples 1-8 having the following concentrations:

0.3% Aspartame (54-60 sucrose equivalents)

0.1% Sucralose (60 sucrose equivalents)

0.03% Alitame (60 sucrose equivalents)

The test solutions in Examples 1-8 had the compositions set out in Table 3.

TABLE 3

| SWEETENING AGENT COMBINATIONS IN SOLUTION | | | | | | | | |
|---|---|---|---|---|---|---|---|---|
| Ingredients | Examples | | | | | | | |
| | 1 | 2 | 3 | 4 | 5 | 6 | 7 | 8 |
| Aspartame | - | - | 0.3 | 0.3 | - | - | - | - |
| Sucralose | - | - | - | - | 0.1 | 0.1 | - | - |
| Alitame | - | - | - | - | - | - | 0.03 | 0.03 |
| HSH | - | 50.0 | - | 50.0 | - | 50.0 | - | 50.0 |
| Glycerin | 50.0 | - | 50.0 | - | 50.0 | - | 50.0 | - |
| Water | 50.0 | 50.0 | 49.7 | 49.7 | 49.9 | 49.9 | 49.97 | 49.97 |

On a relztive scale of sucrose = 1, Alitame = 2000X, Aspartame = 180X-200X and Sucralose = 600X, the above set forth percentages of intense sweetening agents in the solutions of Examples 3-8 should produce equivalent sweetening intensity contributions. This was found not to be the case.

An expert taste panel evaluated the relative sweetening intensity of the solutions of Examples 1-8 (on a scale of 0-100, 0 being not sweet, and 100 being very sweet) in random order and the findings were pooled and averaged. The sweetness contribution of a particular intense sweetener in glycerin or HSH (Examples 3-8) was calculated by subtracting the sweetness intensity of the sample containing only the bulk sweetening agent (Example 1 or 2) from the sweetness intensity of the sample containing the intense sweetener in the bulk sweetening agent (Examples 3-8). For example the sweetness contribution of Alitame in glycerin was calculated by subtracting the sweetness intensity of Example 1 (glycerin) from the sweetness intensity of Example 7 (glycerin and Alitame) and the sweetness contribution of Alitame in HSH was calculated by subtracting the sweetness intensity of Example 2 (HSH) from the sweetness intensity of Example 8 (HSH and Alitame). The results from the taste panel are depicted in bar graph format in Figure 1.

The sweetness contribution of each intense sweetener to the composition should be equal if no synergy is present. Figure 1 shows that the sweetness contribution of the combination of Alitame and HSH in solution is higher than the expected value. Figure 1 shows that the solution of Example 8 possesses enhanced sweetening intensity meaning a synergy of sweetness effect exists between Alitame and HSH at the ratio of 0.06:99.94.

EXAMPLES 9-13

These Examples demonstrate the synergistic sweetness effect of the combination of L-alpha-aspartyl-D-alanine N-(2,2,4,4-tetramethyl-3-thietanyl)amide and HSH at various weight ratios in solution.

An initial stock aqueous solution of Alitame was prepared as set out above for Examples 1-8. The test solutions in Examples 9-13 had the compositions set out in Table 4.

TABLE 4

| ALITAME AND HSH AT VARIOUS WEIGHT RATIOS IN SOLUTION | | | | | |
|---|---|---|---|---|---|
| Ingredients | Examples | | | | |
| | 9 | 10 | 11 | 12 | 13 |
| Alitame | 0.1% | 0.075% | 0.05% | 0.025% | --- |
| HSH | --- | 12.5% | 25.0% | 37.5% | 50% |
| Ratio Alitame:HSH | 100:0 | 75:25 | 50:50 | 25:75 | 0:100 |
| Weight Ratio Alitame:HSH | 100:0 | 0.6:99.4 | 0.2:99.8 | 0.07:99.93 | 0:100 |

The above set forth percentages of sweeteners in solutions 9-13 should produce equivalent sweetening intensities. Varying the amounts of Alitame and HSH by percentages related to the above defined end points should produce, in solutions 9-13, equivalent sweetening intensities. This was found not to be the case.

An expert taste panel evaluated the relative sweetening intensity of the solutions of Examples 9-13 (on a scale of 0-100, 0 being not sweet, and 100 being very sweet) in random order and the findings were pooled and averaged. The results from the taste panel are depicted in graphic format in Figure 2.

Figure 2 shows that the solutions of Examples 10, 11 and 12 possess enhanced sweetening intensity, higher than the sweetening intensity expected from the linear combination of Alitame and HSH alone. The highest synergy of sweetness effect observed exists between Alitame and HSH at the weight ratio of 0.06:99.94 in Example 12 wherein a synergy of 28% was observed.

EXAMPLES 14-17

These Examples demonstrate the synergistic sweetness effect of the combination of L-alpha-aspartyl-D-alanine N-(2,2,4,4-tetramethyl-3-thietanyl)amide and HSH in chewing gum compositions containing sorbitol as the carbohydrate bulking agent.

Alitame and Aspartame were combined to formulate the test chewing gum compositions of Examples 14-17, prepared by conventional chewing gum manufacturing techniques, with the compositions set out in Table 5.

TABLE 5

| SYNERGISTIC SWEETENING AGENT COMBINATIONS IN CHEWING GUM COMPOSITIONS | | | | |
|---|---|---|---|---|
| Ingredient | EXAMPLES (Percent by Weight) | | | |
| | 14 | 15 | 16 | 17 |
| Gum base | 23.0 | 23.0 | 23.0 | 23.0 |
| Sorbitol | 52.63 | 52.605 | 52.63 | 52.605 |
| Mannitol | 7.00 | 7.00 | 7.00 | 7.00 |
| Softener/Coloring | 0.37 | 0.67 | 0.67 | 0.67 |
| Flavoring | 1.7 | 1.7 | 1.7 | 1.7 |
| Alitame | - | 0.025 | - | 0.025 |
| Glycerin | 15.0 | 15.0 | - | - |
| HSH | - | - | 15.0 | 15.0 |

An expert sensory chew panel having experience in the organoleptic evaluation of ingestible products, including chewing gums, evaluated the relative sweetening intensity of the chewing gum compositions of Examples 14-17, inclusive, at 30 seconds, 2 minutes, 6 minutes and 10 minutes (on a scale of 0-100, 0 being not sweet, and 100 being very sweet) in random order and the findings were pooled and averaged. The sweetness contribution of Alitame in HSH (Example 17) was calculated by subtracting the sweetness intensity of the bulk sweetener HSH (Example 16) from the sweetness intensity of the intense sweetener Alitame in HSH (Example 17). Similarly, the sweetness contribution of Alitame in glycerin (Example 15) was calculated by subtracting the sweetness intensity of the bulk sweetener glycerin (Example 14) from the sweetness intensity of Alitame in glycerin (Example 15). The findings are graphically depicted in Figure 3, where sweetness intensity contribution by Alitame is plotted versus chew out time.

Figure 3 shows that the contribution of sweetness by Alitame in HSH in gum composition (Example 17) was higher than the contribution of sweetness by Alitame in glycerin in gum composition (Example 15) at every time period. The chewing gum composition of Example 17 showed enhanced sweetening intensity meaning a synergy of sweetness effect between Alitame and HSH exists in chewing gum at the ratio of from about 0.17 to about 99.83, respectively.

## EXAMPLES 18-21

These Examples demonstrate the synergistic sweetness effect of the combination of L-alpha-aspartyl-D-alanine N-(2,2,4,4-tetramethyl-3-thietanyl)amide (Alitame) and HSH in chewing gum compositions containing maltitol as the carbohydrate bulking agent.

Alitame and Aspartame were combined to formulate the test chewing gum compositions of Examples 18-21, prepared by conventional chewing gum manufacturing techniques, with the compositions set out in Table 6.

TABLE 6

| SYNERGISTIC SWEETENING AGENT COMBINATIONS IN CHEWING GUM COMPOSITIONS | | | | |
|---|---|---|---|---|
| Ingredient | EXAMPLES (Percent by Weight) | | | |
| | 18 | 19 | 20 | 21 |
| Gum base | 23.0 | 23.0 | 23.0 | 23.0 |
| Maltitol | 52.63 | 52.605 | 52.63 | 52.605 |
| Mannitol | 7.00 | 7.00 | 7.00 | 7.00 |
| Softener/Coloring | 0.67 | 0.67 | 0.67 | 0.67 |
| Flavoring | 1.7 | 1.7 | 1.7 | 1.7 |
| Alitame | - | 0.025 | - | 0.025 |
| Glycerin | 15.0 | 15.0 | - | - |
| HSH | - | - | 15.0 | 15.0 |

An expert sensory chew panel having experience in the organoleptic evaluation of ingestible products, including chewing gums, evaluated the relative sweetening intensity of the chewing gum compositions of Examples 18-21, inclusive, at 30 seconds, 2 minutes, 6 minutes and 10 minutes (on a scale of 0-100, 0 being not sweet, and 100 being very sweet) in random order and the findings were pooled and averaged. The sweetness contribution of Alitame in HSH (Example 21) was calculated by subtracting the sweetness intensity of the bulk sweetener HSH (Example 20) from the sweetness intensity of the intense sweetener Alitame in HSH (Example 21). Similarly, the sweetness contribution of Alitame in glycerin (Example 19) was calculated by subtracting the sweetness intensity of the bulk sweetener glycerin (Example 18) from the sweetness intensity of Alitame in glycerin (Example 19). The findings are graphically depicted in Figure 4, where sweetness intensity contribution by Alitame is plotted versus chew out time.

Figure 4 shows that the contribution of sweetness by Alitame in HSH in gum composition (Example 21) was higher than the contribution of sweetness by Alitame in glycerin in gum composition (Example 19) at every time period except at two minutes where the sweetness contribution was similar. The chewing gum composition of Example 21 showed enhanced sweetening intensity meaning a synergy of sweetness effect between Alitame and HSH exists in chewing gum at the ratio of from about 0.17 to about 99.83, respectively.

The invention being thus described, it will be obvious that the same may be varied in many ways. Such variations are not to be regarded as a departure from the spirit and scope of the invention and all such modifications are intended to be included within the scope of the following claims.

## Claims

1. A synergistic sweetening composition which comprises L-alpha-aspartyl-D-alanine N-(2,2,4,4-tetramethyl-3-thietanyl)amide and a hydrogenated starch hydrolysate.
2. An edible composition which comprises a pharmaceutically acceptable carrier and an effective amount of a synergistic sweetening composition comprising L-alpha-aspartyl-D-alanine N-(2,2,4,4-tetramethyl-3-thietanyl)amide and a hydrogenated starch hydrolysate.
3. An edible composition according to claim 2, wherein the synergistic sweetening composition is present in an amount from 10% to 50%, by weight of the edible composition.
4. A sweetened chewing gum composition which comprises a chewing gum base and an effective amount of a synergistic sweetening composition comprising L-alpha-aspartyl-D-alanine N-(2,2,4,4-tetramethyl-3-thietanyl)amide and a hydrogenated starch hydrolysate.
5. A sweetened chewing gum composition according to claim 4, wherein the synergistic sweetening composition is present in an amount from 1% to 25%, by weight of the chewing gum composition.
6. A sweetened chewing gum composition according to claim 4, wherein the chewing gum base is present in an amount from 50% to 95%, by weight of the chewing gum composition.
7. A sweetened chewing gum composition according to claim 4, wherein the chewing gum base is present in an amount up to 55%, by weight of the chewing gum composition.

8. A sweetened confectionery composition which comprises a confectionery bulking agent and an effective amount of a synergistic sweetening composition comprising L-alpha-aspartyl-D-alanine N- (2,2,4,4-tetramethyl-3-thietanyl)amide and a hydrogenated starch hydrolysate.

9. A sweetened confectionery composition according to claim 8, wherein the synergistic sweetening composition is present in an amount from 50% to 98%, by weight of the confectionery composition.

10. A composition according any preceding claim, wherein L-alpha-aspartyl-D-alanine N-(2,2,4,4-tetramethyl-3-thietanyl)amide and the hydrogenated starch hydrolysate are present in a ratio by weight of from 0.02:99.98 to 1:99, respectively.

11. A composition according to any preceding claim, wherein L-alpha-aspartyl-D-alanine N-(2,2,4,4-tetramethyl-3-thietanyl)amide and the hydrogenated starch hydrolysate are present in a ratio by weight of from 0.05:99.95 to 0.6:99.4, respectively.

12. A composition according to any preceding claim, wherein the hydrogenated starch hydrolysate has a DP-1 value of up to 19%, a DP-2 value of up to 60%, a DP-20 or higher value of up to 3%, and a DP-3 to DP-20 value constituting the balance.

13. A process for preparing a synergistic sweetening composition which comprises admixing L-alpha-aspartyl-D-alanine N-(2,2,4,4-tetramethyl-3-thietanyl)-amide and a hydrogenated starch hydrolysate.

14. A process for preparing a sweetened edible composition, which comprises admixing an effective amount of a synergistic sweetening composition with a pharmaceutically acceptable carrier, wherein the synergistic sweetening composition comprises L-alpha-aspartyl-D-alanine N-(2,2,4,4-tetramethyl-3-thietanyl)-amide and a hydrogenated starch hydrolysate.

15. A process according to claim 14, wherein the synergistic sweetening composition is present in an amount from 10% to 50%, by weight of the edible composition.

16. A process for preparing a sweetened chewing gum composition, which comprises admixing an effective amount of a synergistic sweetening composition with a chewing gum base wherein the synergistic sweetening composition comprises L-alpha-aspartyl-D-alanine N-(2,2,4,4-tetramethyl-3-thietanyl)-amide and a hydrogenated starch hydrolysate.

17. A process according to claim 16, wherein the synergistic sweetening composition is present in an amount from 1% to 25%, by weight of the chewing gum composition.

18. A process according to claim 16, wherein the chewing gum base is present in an amount from 50% to 95%, by weight of the chewing gum composition.

19. A process according to claim 16, wherein the chewing gum base is present in an amount up to 55%, by weight of the chewing gum composition.

20. A process for preparing a sweetened confectionery composition, which comprises admixing an effective amount of a synergistic sweetening composition with a confectionery bulking agent, wherein the synergistic sweetening composition comprises L-alpha-aspartyl-D-alanine N-(2,2,4,4-tetramethyl-3-thietanyl)-amide and a hydrogentated starch hydrolysate.

21. A process according to claim 20, wherein the synergistic sweetening composition is present in an amount from 50% to 98%, by weight of the confectionery composition.

22. A process for sweetening an edible composition, which comprises adding to the edible composition an effective amount of a synergistic sweetening composition, wherein the synergistic sweetening composition comprises L-alpha-aspartyl-D-alanine N-(2,2,4,4-tetramethyl-3-thietanyl)amide and a hydrogenated starch hydrolysate.

23. A process according to claim 22, wherein the synergistic sweetening composition is present in an mount from 10% to 50%, by weight of the edible composition.

24. A process according to any one of claims 13 to 23, wherein the synergistic sweetening composition comprises L-alpha-aspartyl-D-alanine N-(2,2,4,4-tetramethyl-3-thietanyl)amide and the hydrogenated starch hydrolysate present in a ratio by weight of from 0.02:99.98 to 1:99, respectively.

25. A process according to any one of claims 13 to 24, wherein the hydrogenated starch hydrolysate has a DP-1 value of up to 19%, a DP-2 value of up to 60%, a DP-20 or higher value of up to 3%, and a DP-3 to DP-20 value constituting the balance.

Claims for the following Contracting State: ES

1. A process for producing a synergistic sweetening composition, which process comprises admixing L-alpha-aspartyl-D-alanine N-(2,2,4,4-tetramethyl-3-thietanyl)amide and a hydrogenated starch hydrolysate.

2. A process for producing an edible composition, which process comprises admixing a pharmaceutically acceptable carrier and an effective amount of a synergistic sweetening composition comprising L-alpha-aspartyl-D-alanine N-(2,2,4,4-tetramethyl-3-thietanyl)amide and a hydrogenated starch hydrolysate.

3. A process according to claim 2, wherein the synergistic sweetening composition is present in an amount from 10% to 50%, by weight of the edible composition.

4. A process for producing a sweetened chewing gum composition, which process comprises admixing a chewing gum base and an effective amount of a synergistic sweetening composition comprising L-alpha-aspartyl-D-alanine N-(2,2,4,4-tetramethyl-3-thietanyl)amide and a hydrogenated starch hydrolysate.

5. A process according to claim 4, wherein the synergistic sweetening composition is present in an amount from 1% to 25%, by weight of the chewing gum composition.

6. A process according to claim 4, wherein the chewing gum base is present in an amount from 50% to 95%, by weight of the chewing gum composition.

7. A process according to claim 4, wherein the chewing gum base is present in an amount up to 55%, by weight of the chewing gum composition.

8. A process for producing a sweetened confectionery composition, which process comprises admixing a confectionery bulking agent and an effective amount of a synergistic sweetening composition comprising L-alpha-aspartyl-D-alanine N-(2,2,4,4-tetramethyl-3-thietanyl)amide and a hydrogenated starch hydrolysate.

9. A process according to claim 8, wherein the synergistic sweetening composition is present in an amount from 50% to 98%, by weight of the confectionery composition.

10. A process according any preceding claim, wherein L-alpha-aspartyl-D-alanine N-(2,2,4,4-tetramethyl-3-thietanyl)amide and the hydrogenated starch hydrolysate are present in a ratio by weight of from 0.02:99.98 to 1:99, respectively.

11. A process according to any preceding claim, wherein L-alpha-aspartyl-D-alanine N-(2,2,4,4-tetramethyl-3-thietanyl)amide and the hydrogenated starch hydrolysate are present in a ratio by weight of from 0.05:99.95 to 0.6:99.4, respectively.

12. A process according to any preceding claim, wherein the hydrogenated starch hydrolysate has a DP-1 value of up to 19%, a DP-2 value of up to 60%, a DP-20 or higher value of up to 3%, and a DP-3 to DP-20 value constituting the balance.

13. A process for sweetening an edible composition, which comprises adding to the edible composition an effective amount of a synergistic sweetening composition, wherein the synergistic sweetening composition comprises L-alpha-aspartyl-D-alanine N-(2,2,4,4-tetramethyl-3-thietanyl)amide and a hydrogenated starch hydrolysate.

FIG-1

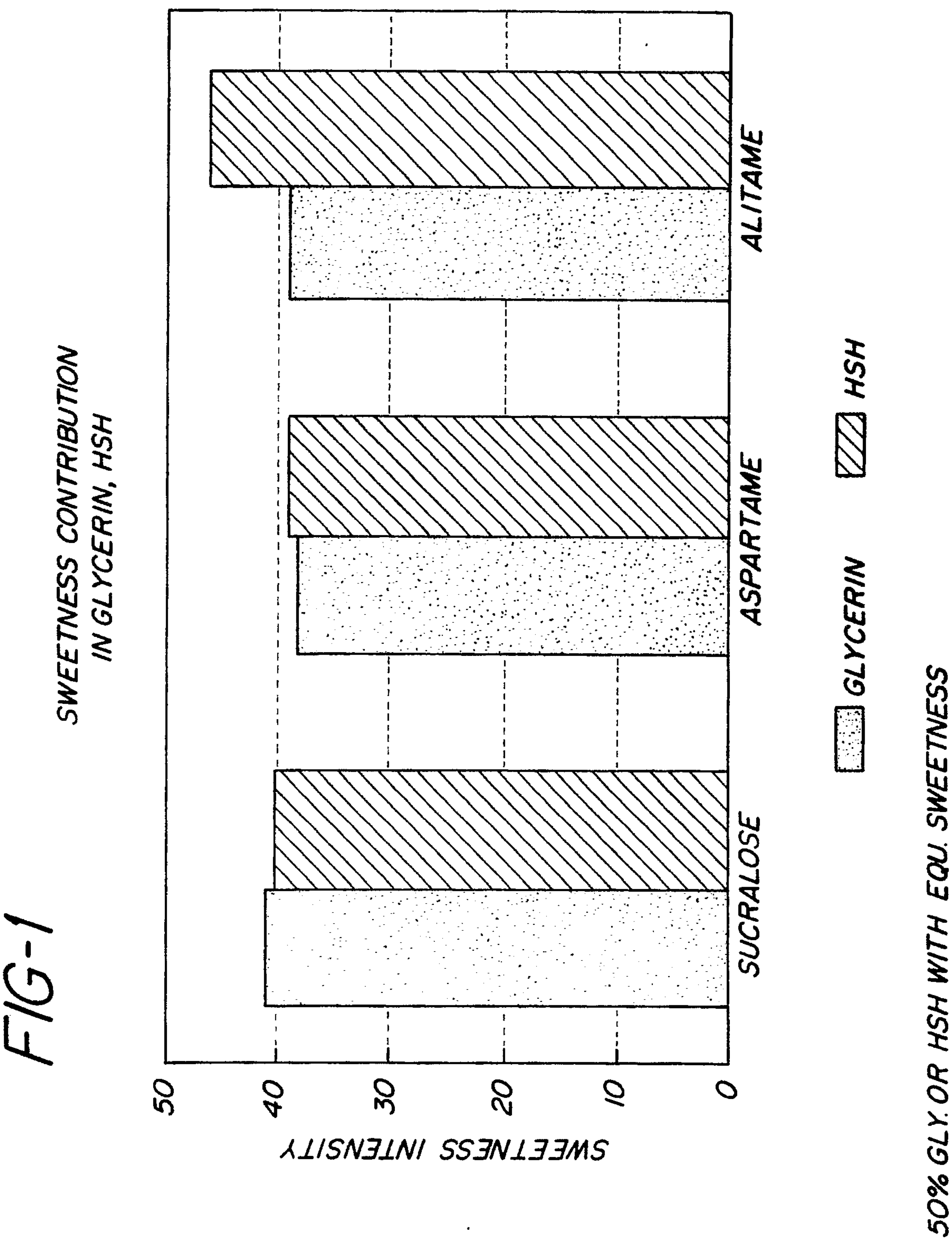
SWEETNESS CONTRIBUTION
IN GLYCERIN, HSH
SWEETNESS INTENSITY
0
10
20
30
40
50
SUCRALOSE
ASPARTAME
ALITAME
GLYCERIN
HSH
50% GLY. OR HSH WITH EQU. SWEETNESS

FIG-2

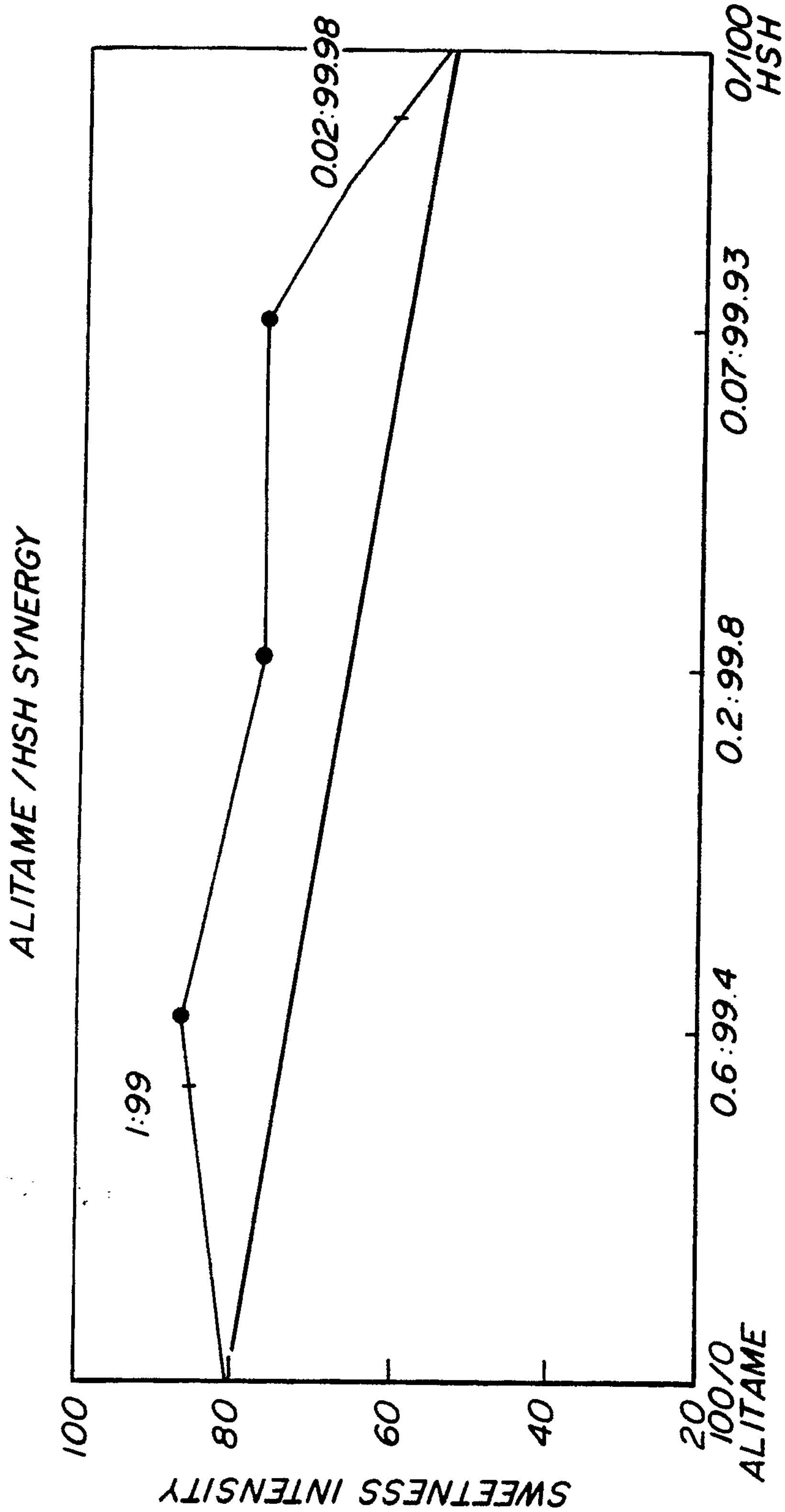
ALITAME /HSH SYNERGY
SWEETNESS INTENSITY
100
80
60
40
20
100/0
ALITAME
1:99
0.6:99.4
0.2:99.8
0.07:99.93
0.02:99.98
0/100
HSH

FIG-3

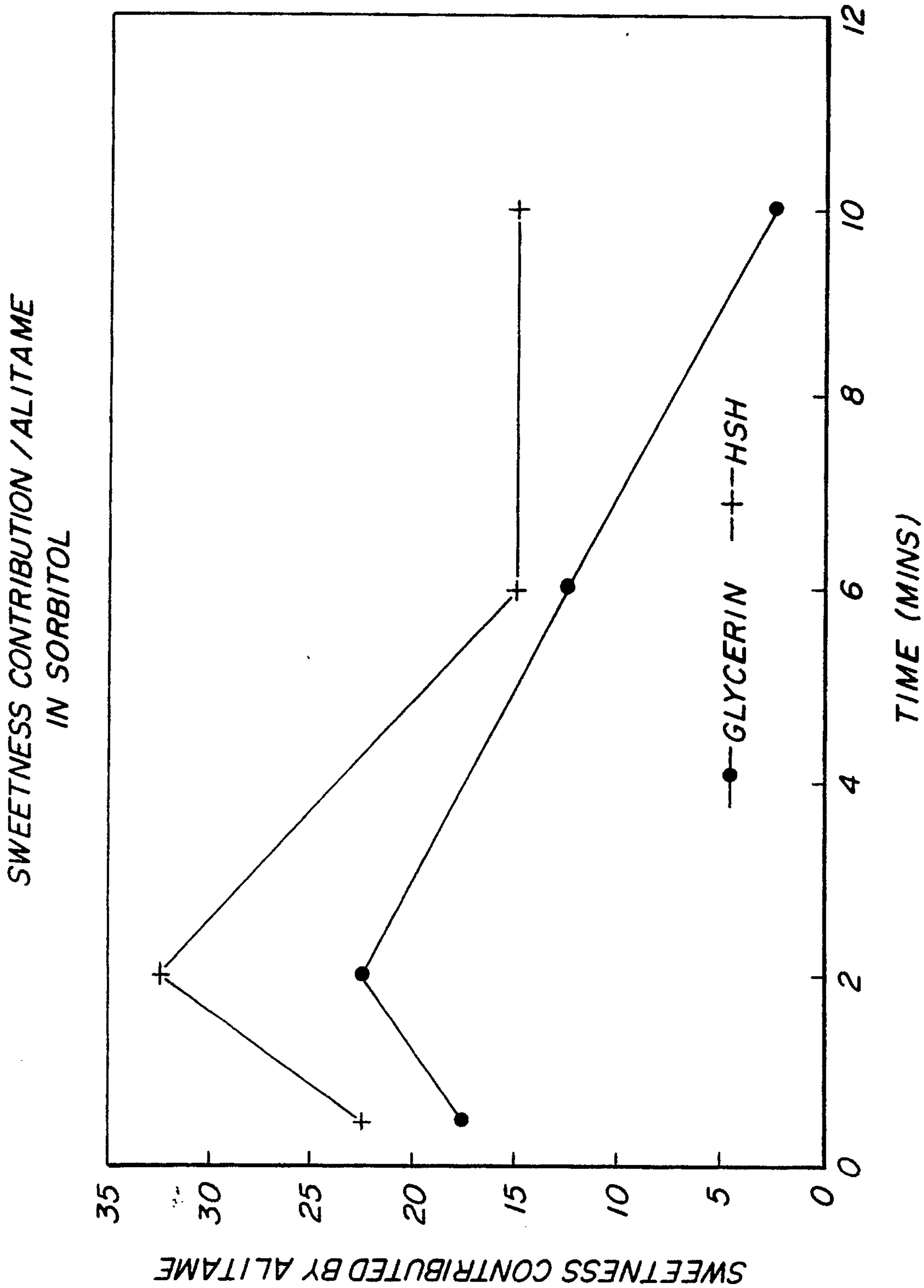
SWEETNESS CONTRIBUTION / ALITAME
IN SORBITOL
SWEETNESS CONTRIBUTED BY ALITAME
TIME (MINS)
GLYCERIN
HSH
0
5
10
15
20
25
30
35
2
4
6
8
10
12

FIG-4

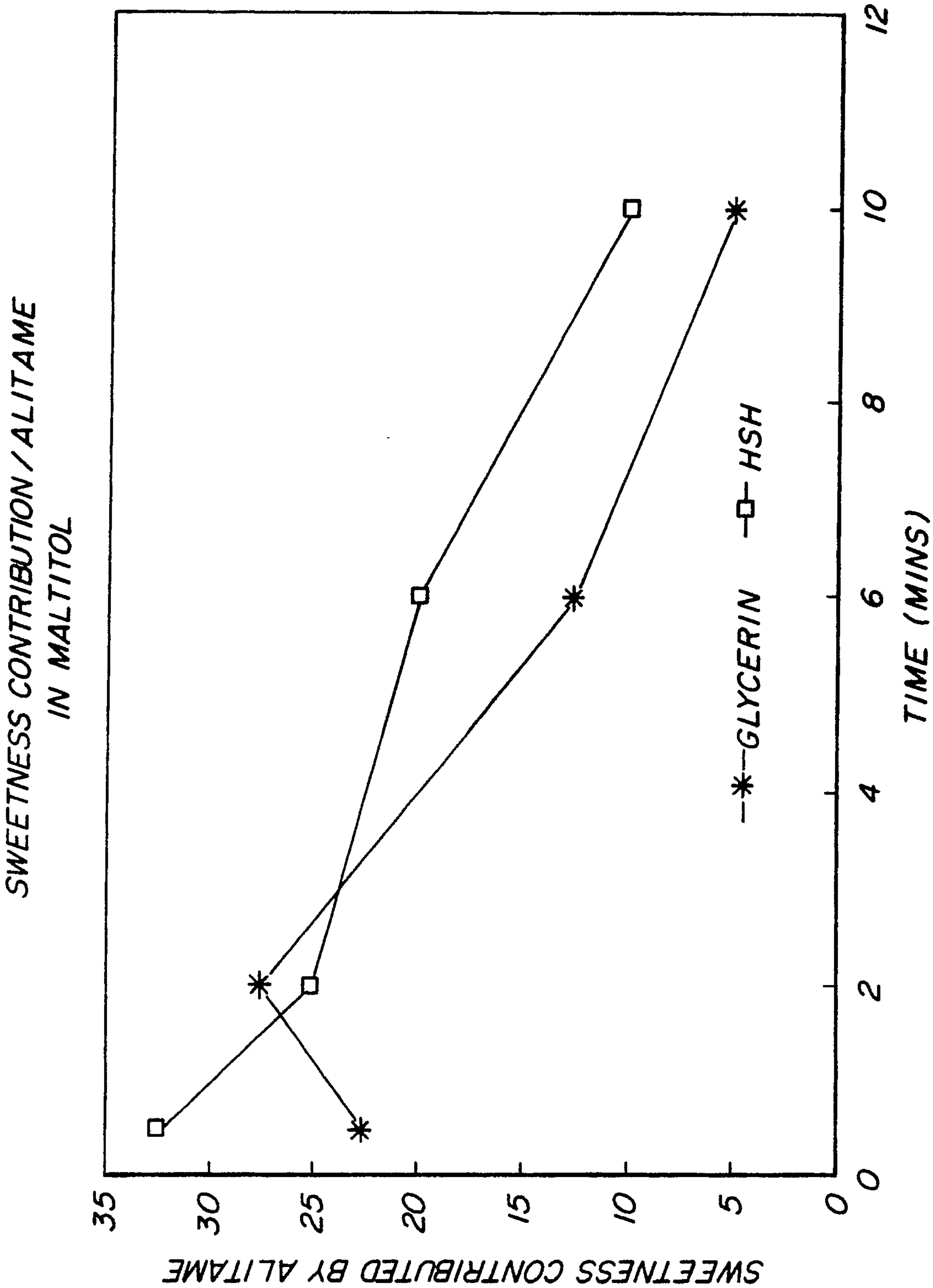
SWEETNESS CONTRIBUTION / ALITAME
IN MALTITOL
SWEETNESS CONTRIBUTED BY ALITAME
TIME (MINS)
GLYCERIN
HSH
0
5
10
15
20
25
30
35
2
4
6
8
10
12